# FASCICULE DE BREVET EUROPEEN

(11) **EP 4 351 944 B1**
(45) Date de publication et mention de la délivrance du brevet: **28.05.2025**
(21) Numéro de dépôt: 22721421.0
(22) Date de dépôt: 08.04.2022
(51) Int. Cl.: B60W 30/14, B60W 30/18

(54) **PROCÉDÉ ET DISPOSITIF DE RÉGULATION DE VITESSE D'UN VÉHICULE À PARTIR D'UN VÉHICULE CIBLE**
VERFAHREN UND VORRICHTUNG ZUR STEUERUNG DER GESCHWINDIGKEIT EINES FAHRZEUGS AUF BASIS EINES ZIELFAHRZEUGS
METHOD AND DEVICE FOR CONTROLLING THE SPEED OF A VEHICLE BASED ON A TARGET VEHICLE

(30) Priorité: 08.06.2021 FR 2106018
(43) Date de publication de la demande: 17.04.2024
(73) Titulaire: Stellantis Auto SAS, 78300 Poissy (FR)
(72) Inventeur: ABOULISSANE, Badreddine, Taroudant, 83350 (MA); ABOUESSIRE, Ismail, Marrakech, 40160 (MA); AIT ALI, Meriem, Casablanca, 20580 (MA); LAHLOU, Zoubida, Casablanca, 20190 (MA)
(74) Mandataire: ESIP
(86) Numéro de dépôt international: PCT/FR2022/050669
(87) Numéro de publication internationale: WO 2022/258892

(56) Documents cités:
- WO-A1-2004/045896
- DE-A1- 19 637 245
- DE-T5- 112016 000 421
- US-A1- 2018 284 266

## Description

### Domaine technique

La présente invention revendique la priorité de la demande française 2106018 déposée le 8.06.2021. L'invention concerne les procédés et dispositifs de régulation de vitesse d'un véhicule, notamment automobile, à partir d'un véhicule cible lorsque le véhicule change de voie de circulation.

### Arrière-plan technologique

Avec le développement du réseau routier et l'augmentation du nombre de voies de circulation, la sécurité routière devient un sujet de préoccupation important. En effet, avec le nombre de véhicules qui augmente sur le réseau routier, les risques de collisions augmentent, notamment sur les routes à plusieurs voies de circulation.

Pour améliorer la sécurité routière, certains véhicules sont équipés de fonctions ou systèmes d'aide à la conduite, dit ADAS (de l'anglais « Advanced Driver-Assistance System »). Pour assurer le bon fonctionnement de ces systèmes d'aide à la conduite, une connaissance précise de l'environnement autour du véhicule est nécessaire.

L'un de ces systèmes ADAS couramment utilisés dans les véhicules est un régulateur de vitesse adaptatif ACC (de l'anglais « Adaptatif Cruise Control »). Un régulateur ACC est un équipement électronique qui accroît le confort et la sécurité des occupants et plus généralement des autres usagers, que l'on circule en agglomération, sur route ou autoroute. En plus des fonctions de régulation de vitesse classique, un régulateur ACC adapte la vitesse du véhicule en fonction du flux de véhicules présent devant lui. Pour cela, un capteur est installé à l'avant du véhicule pour surveiller le flux de véhicules présent devant lui. Si ce capteur détecte dans son champ d'action un véhicule cible circulant devant lui à plus faible allure, le régulateur ACC désactive la régulation de vitesse alors soumise à une vitesse de consigne, et réduit la vitesse du véhicule pour maintenir une distance de sécurité suffisante avec le véhicule cible. Au besoin, le régulateur ACC peut activer une commande de frein. Dans le cas où le véhicule cible change de voie de circulation ou accélère, le régulateur ACC augmente la vitesse du véhicule jusqu'à atteindre la vitesse de consigne et active alors la régulation de vitesse alors à nouveau soumise à cette vitesse de consigne.

Lorsqu'un véhicule, dont la vitesse est régulée par un régulateur ACC, change de voie de circulation, un problème de choix du véhicule cible peut se poser lorsque plusieurs précèdent ce véhicule : l'un circulant sur la voie de circulation sur laquelle le véhicule circule et un autre circulant sur la voie de circulation sur laquelle le véhicule va circuler une fois qu'il aura changé de voie de circulation. Sélectionner l'un de ces deux véhicules en tant que véhicule cible demandent des ressources calculatoires importantes qui vont au-delà des capacités des régulateurs ACC actuels.

En outre, l'état de la technique est connu du document DE19637245A1.

Un problème est de sélectionner un véhicule cible pour la régulation de vitesse adaptative d'un véhicule lorsque ce véhicule est en train de changer de voie de circulation.

### Résumé de l'invention

Un objet de la présente invention est d'améliorer la connaissance de l'environnement d'un véhicule.

Un autre objet de la présente invention est d'améliorer la régulation de vitesse adaptative de véhicule.

Un autre objet de la présente invention est d'améliorer la sécurité routière.

Selon un premier aspect, l'invention concerne un procédé de régulation de vitesse d'un véhicule à partir d'un véhicule cible, ledit procédé étant mis en œuvre par au moins un processeur, ledit procédé comprenant une étape de détection d'un changement de voie de circulation du véhicule d'une première voie de circulation, sur laquelle circule le véhicule, vers une deuxième voie de circulation, sur laquelle va circuler le véhicule lorsque le changement de voie de circulation sera terminé, la deuxième voie de circulation étant délimitée par une ligne de rive et une ligne de séparation ; une étape de détection d'un premier véhicule cible circulant dans la première voie de circulation et d'un deuxième véhicule cible circulant dans la deuxième voie de circulation ; et une étape d'obtention d'une première distance latérale entre le premier véhicule cible et la ligne de rive et d'une deuxième distance latérale entre le deuxième véhicule cible et la ligne de rive ; la vitesse du véhicule étant alors régulée par rapport au premier véhicule cible si la première distance latérale est inférieure à la deuxième distance latérale, et au deuxième véhicule cible si la première distance latérale est supérieure à la deuxième distance latérale.

Selon un exemple de réalisation particulier et non limitatif, la première voie de circulation étant délimitée par une ligne de rive et la ligne de séparation, le changement de voie de circulation est détecté par comparaison de distances latérales du véhicule par rapport aux lignes de rive de la première et deuxième voies de circulation.

Selon un exemple de réalisation particulier et non limitatif, une ligne de rive est représentée par un polynôme.

Selon un exemple de réalisation particulier et non limitatif, la ligne de rive de la première voie de circulation est représentée par un polynôme de degré 3 dont une valeur constante est égale à une troisième distance latérale entre le véhicule et la ligne de rive de la première voie de circulation, et la ligne de rive de la deuxième voie de circulation est représentée par un polynôme de degré 3 dont une valeur constante est égale à une quatrième distance latérale entre le véhicule et la ligne de rive de la deuxième voie de circulation.

Selon un exemple de réalisation particulier et non limitatif, un indice d'existence de ligne étant associé à chaque ligne marquée sur le sol des voies de circulation, la première, deuxième, troisième et quatrième distances sont obtenues si les indices d'existence des lignes de rive de la première et deuxième voie de circulation sont supérieurs à un seuil.

Selon un deuxième aspect, l'invention concerne un dispositif de régulation de vitesse d'un véhicule à partir d'un véhicule cible, le dispositif comprenant une mémoire associée à un processeur configuré pour la mise en œuvre des étapes du procédé selon le premier aspect de l'invention.

Selon un troisième aspect, l'invention concerne un véhicule, par exemple de type automobile, comprenant un dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre de façon schématique un environnement routier pour la mise en œuvre d'un procédé de régulation de vitesse d'un véhicule à partir d'un véhicule cible, selon un exemple de réalisation particulier et non limitatif de la présente invention ;
[Fig. 2] illustre schématiquement un dispositif configuré pour réguler la vitesse d'un véhicule à partir d'un véhicule cible de l'environnement routier de la figure 1, selon un exemple de réalisation particulier et non limitatif de la présente invention ; et
[Fig. 3] illustre un organigramme des différentes étapes d'un procédé de régulation de vitesse d'un véhicule à partir d'un véhicule cible de l'environnement routier de la figure 1, selon un exemple de réalisation particulier et non limitatif de la présente invention.

### Description des modes de réalisation

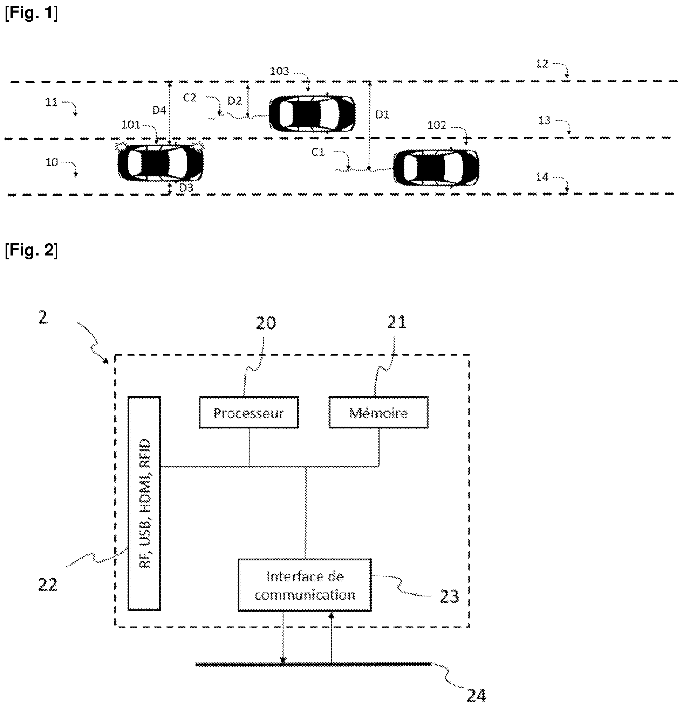

Un procédé et un dispositif de régulation de vitesse d'un véhicule à partir d'un véhicule cible vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de l'invention, un procédé de régulation de vitesse d'un véhicule à partir d'un véhicule cible comprend la détection d'un changement de voie de circulation du véhicule d'une première voie de circulation, sur laquelle circule le véhicule, vers une deuxième voie de circulation, sur laquelle va circuler le véhicule, la première voie de circulation étant délimitée par une première ligne de rive et une ligne de séparation et la deuxième voie de circulation étant délimitée par une deuxième ligne de rive et la ligne de séparation. Le procédé comprend également la détection d'un premier véhicule cible circulant dans la première voie de circulation et d'un deuxième véhicule cible circulant dans la deuxième voie de circulation et l'obtention d'une première distance latérale, entre le premier véhicule cible et la deuxième ligne de rive, et d'une deuxième distance entre le deuxième véhicule cible et la deuxième ligne de rive. La régulation de la vitesse du véhicule est alors régulée par rapport au premier véhicule cible si la première distance est inférieure à la deuxième distance, et au deuxième véhicule cible si la première distance est supérieure à la deuxième distance.

La comparaison de distances évaluées entre une ligne de rive de la deuxième voie de circulation (sur laquelle le véhicule va circuler une fois qu'il aura terminé son changement de voie de circulation), permet de réguler la vitesse de ce véhicule par rapport à un deuxième véhicule cible (qui circule déjà sur cette deuxième voie de circulation). Le procédé évite des changements brusques de régulation de vitesse lorsqu'un premier véhicule cible (circulant sur la première voie de circulation sur laquelle circule le véhicule avant le changement de voie de circulation) et le deuxième véhicule cible n'ont pas le même vitesse car la régulation de vitesse tient compte du deuxième véhicule cible dès qu'un changement de voie de circulation est détecté.

[Fig. 1] illustre de façon schématique un environnement routier 1 pour la mise en œuvre d'un procédé de régulation de vitesse d'un véhicule à partir d'un véhicule cible, selon un exemple de réalisation particulier et non limitatif de la présente invention.

La figure 1 illustre un environnement routier 1 comprenant par exemple une route à plusieurs voies de circulation 10 et 11, c'est-à-dire avec plusieurs voies de circulation selon un sens de circulation donné. L'environnement routier 1 correspond par exemple à une portion de voie rapide, par exemple une portion à 2 fois 2 voies de circulation (2 voies dans un sens et 2 voies dans l'autre sens).

Un véhicule 101 et un véhicule 102 circulent sur une première voie de circulation 10. Un véhicule 103 circule sur une deuxième voie de circulation 11. Le clignotant du véhicule 101 est activé pour indiquer que le véhicule 101 va changer de voie de circulation, passant de la première voie de circulation 10 à la deuxième voie de circulation 11 située sur la gauche de la voie de circulation 10. La droite et la gauche sont définies par rapport au sens de circulation du véhicule 101.

La présente invention n'est pas limitée au changement de voie de circulation décrit à la figure 1 mais s'étend au changement de voie de circulation passant d'une première voie circulation vers une deuxième voie de circulation située sur la droite de la première voie de circulation.

La première voie de circulation 10 et la deuxième voie de circulation 11 sont matérialisées (délimitées) par des marquages au sol correspondant à des lignes tracées sur le sol. La première voie de circulation 10 est délimitée par une première ligne de rive 14 et une ligne de séparation 13 et la deuxième voie de circulation 11 est délimitée par une deuxième ligne de rive 12 et la ligne de séparation 13. Les lignes 12, 13 et 14 sont avantageusement déterminées à partir de données obtenues par le véhicule 101. Ces données sont par exemple obtenues par un système de détection de marquage au sol embarqué dans le véhicule 101. Un tel système comprend une ou plusieurs caméras pour l'acquisition d'images de la route à l'avant et sur les côtés du véhicule 101. Un traitement d'image est appliqué à ces images pour déterminer la présence de lignes au sol et pour classifier ces lignes en différentes catégories, par exemple pour déterminer si les lignes au sol correspondent à des lignes de rive ou des lignes de séparation de voies de circulation par exemple. Un exemple de traitement d'image pour détecter les lignes au sol est par exemple décrit dans le document WO2017194890A1.

Dans une première opération, le véhicule 101 détecte un changement de voie de circulation passant de la première voie de circulation 10, sur laquelle il circule, vers la deuxième voie de circulation 11, sur laquelle il va circuler lorsque le changement de voie de circulation sera terminé.

Selon un exemple de réalisation particulier et non limitatif, le changement de voie de circulation est détecté par comparaison de distances latérales du véhicule 101 par rapport à la première ligne de rive 14 et à la deuxième ligne de rive 12.

Selon un exemple de réalisation particulier et non limitatif, les distances latérales du véhicule 101 par rapport aux lignes de rive sont évaluées à partir d'information issues de traitement d'images obtenues par une ou plusieurs caméras du système de détection de ligne situées sur les côtés du véhicule 101.

Selon un exemple de réalisation particulier et non limitatif, la première 14 et la deuxième 12 lignes de rive sont représentées par un polynôme, par exemple de degré 3.

Un polynôme de degré 3 est donné par : y *= A*₃*x*³ *+ A*₂*x*² *+ A*₁*x + A*₀ avec *A*₀ une valeur constante, *A₃,A₂ et A₁* des coefficients du polynôme et (x,y) des coordonnées exprimées dans un référentiel du véhicule 101. Par exemple, le référentiel du véhicule 101 est défini par un plan (o,X,Y) dont une origine o est un point situé sur le véhicule 101, un axe des abscisses X s'étend de l'origine o vers l'avant du véhicule 101 et un axe des ordonnées Y s'étend de l'origine o vers la gauche du véhicule 101.

Selon un exemple de réalisation particulier et non limitatif, la première ligne de rive 14 est représentée par un polynôme de degré 3 dont une valeur constante A₀ est égale à une troisième distance latérale D3, exprimée dans le référentiel du véhicule 101, entre le véhicule 101 et la première ligne de rive 14, et la deuxième ligne de rive 12 est représentée par un polynôme de degré 3 dont une valeur constante A₀ est égale à une quatrième distance latérale D4, exprimée dans le référentiel du véhicule 101, entre le véhicule 101 et la deuxième ligne de rive 12.

Une distance latérale du véhicule 101 par rapport à une ligne de rive est définie par l'intervalle qui s'étend perpendiculairement de l'axe X au polynôme de degré 3 qui représente cette ligne de rive.

Dans une deuxième opération, le véhicule 101 détecte un premier véhicule cible, en l'occurrence le véhicule 102, circulant dans la première voie de circulation 10 et un deuxième véhicule cible, en l'occurrence le véhicule 103, circulant dans la deuxième voie de circulation 11.

Selon un exemple de réalisation particulier et non limitatif, le véhicule 101 comprend un système de détection d'objet(s) pour détecter le premier et deuxième véhicule cible. Un système de détection d'objet comprend par exemple des radars à ondes millimétriques disposés sur le véhicule 101, par exemple à l'avant, à l'arrière, sur chaque coin avant/arrière. Chaque radar est adapté pour émettre des ondes électromagnétiques et pour recevoir les échos de ces ondes renvoyées par un ou plusieurs objets, dans le but de détecter des obstacles et leurs distances vis-à-vis du véhicule 101 par exemple. Selon un autre exemple, un système de détection d'objet comprend un ou plusieurs LIDAR(s) (de l'anglais « Light Detection And Ranging », ou « Détection et estimation de la distance par la lumière » en français) et/ou une ou plusieurs caméras (associées ou non à un capteur de profondeur) pour détecter les objets dans l'environnement du véhicule 101, leur distance par rapport au véhicule 101 et éventuellement leur forme ou une partie de leur forme (par modélisation tridimensionnelle par exemple). Un véhicule cible est détecté lorsqu'une position d'un point situé sur ce véhicule cible est obtenu par le système de détection d'objets embarqué du véhicule 101.

Dans une troisième opération, le véhicule 101 obtient une première distance latérale D1 entre le premier véhicule cible 102 et la deuxième ligne de rive 12, et d'une deuxième distance latérale D2 entre le deuxième véhicule cible 103 et la deuxième ligne de rive 12.

Selon un exemple de réalisation particulier et non limitatif, le véhicule 101 comprend un système de détection d'objets qui détermine et enregistre des positions successives du premier véhicule cible 102, illustrées sur la figure 1 par un ensemble de points C1, et des positions successives du deuxième véhicule cible 103, illustrées sur la figure 1 par un ensemble de points C2. Périodiquement, le véhicule 101 considère une position de l'ensemble de points C1 et calcule la distance latérale D1 en partant de cette position et en s'éloignant perpendiculairement de cette position jusqu'à couper la deuxième ligne de rive 12. Le véhicule 101 considère aussi une position de l'ensemble de points C2 et calcule la distance D2 en partant de cette position et en s'éloignant perpendiculairement de cette position jusqu'à couper la deuxième ligne de rive 12.

Dans une quatrième opération, le véhicule 101 régule sa vitesse par rapport au premier véhicule cible 102 si la première distance latérale D1 est inférieure à la deuxième distance latérale D2, et par rapport au deuxième véhicule cible 103 si la première distance latérale D1 est supérieure à la deuxième distance latérale D2. Sur la figure 1, la vitesse du premier véhicule 101 est régulée par rapport au deuxième véhicule cible 103.

Selon un exemple de réalisation particulier et non limitatif, un indice d'existence de ligne est associé à chaque ligne détectée sur le sol des voies de circulation, et la première, deuxième, troisième et quatrième distances latérales sont obtenues si les indices d'existence de la première et de la deuxième lignes de rive sont supérieurs à un seuil. Sinon, aucun changement du véhicule cible n'est mis en œuvre.

Selon un exemple de réalisation particulier et non limitatif, l'indice d'existence de ligne est une valeur comprise entre 0 et 1, la valeur 0 indiquant que l'on ne peut se fier à la ligne détectée et la valeur 1 indique que la ligne est fiable.

En variante, des valeurs intermédiaires entre 0 et 1 indiquent un degré de fiabilité d'une ligne. Un seuil peut être utilisé pour indiquer que la ligne est fiable si son indice d'existence dépasse ce seuil.

[Fig. 2] illustre schématiquement un dispositif 2 configuré pour réguler la vitesse d'un véhicule 101 à partir d'un véhicule cible de l'environnement routier de la figure 1, selon un exemple de réalisation particulier et non limitatif de la présente invention.

Le dispositif 2 est embarqué dans le véhicule 101.

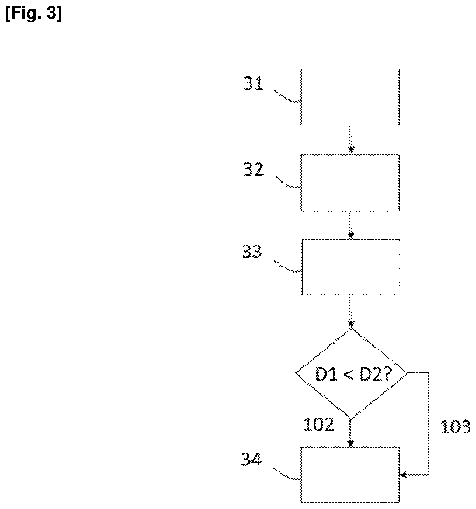

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent (de l'anglais « smartphone »), une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels. Selon différents modes de réalisation particuliers, le dispositif 2 est couplé en communication avec d'autres dispositifs ou systèmes similaires, par exemple par l'intermédiaire d'un bus de communication ou au travers de ports d'entrée / sortie dédiés.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la première mémoire 21.

Selon un mode de réalisation particulier et non limitatif, le dispositif 2 comprend un bloc 22 d'éléments d'interface pour communiquer avec des dispositifs externes, par exemple un serveur distant ou le « cloud », des capteurs embarqués, des dispositifs tels que radar ou caméra. Les éléments d'interface du bloc 22 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre mode de réalisation particulier, le dispositif 2 comprend une interface de communication 23 qui permet d'établir une communication avec d'autres dispositifs (tels que d'autres calculateurs du système embarqué lorsque le dispositif 2 correspond à un calculateur du système embarqué) via un canal de communication 24. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay ou Ethernet.

Selon un mode de réalisation particulier supplémentaire, le dispositif 2 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 3] illustre un organigramme des différentes étapes d'un procédé de régulation de vitesse d'un véhicule à partir d'un véhicule cible de l'environnement routier de la figure 1, selon un exemple de réalisation particulier et non limitatif de la présente invention.

Le procédé est par exemple mis en œuvre par un dispositif 2 embarqué dans le véhicule 101.

Dans une première étape 31, il est détecté un changement de voie de circulation passant de la première voie de circulation 10, sur laquelle il circule, vers la deuxième voie de circulation 11, sur laquelle il va circuler lorsque le changement de voie de circulation sera terminé.

Dans une deuxième étape 32, il est détecté un premier véhicule cible 102, circulant dans la première voie de circulation 10 et un deuxième véhicule cible 103, circulant dans la deuxième voie de circulation 11.

Dans une troisième étape 33, il est obtenu une première distance latérale D1 entre le premier véhicule cible 102 et la deuxième ligne de rive 12, et d'une deuxième distance latérale D2 entre le deuxième véhicule cible 103 et la deuxième ligne de rive 12.

Dans une quatrième étape 34, la vitesse du véhicule 101 est régulée par rapport au premier véhicule cible 102 si la première distance latérale D1 est inférieure à la deuxième distance latérale D2, et par rapport au deuxième véhicule cible 103 si la première distance latérale D1 est supérieure à la deuxième distance latérale D2.

Bien entendu, la présente invention ne se limite pas aux exemples de réalisation décrits ci-avant mais s'étend à un procédé de régulation de vitesse d'un véhicule à partir d'un véhicule cible qui inclurait des étapes secondaires sans pour cela sortir de la portée de la présente invention. Il en serait de même d'un dispositif configuré pour la mise en œuvre d'un tel procédé.

L'invention concerne également un véhicule, par exemple automobile ou plus généralement un véhicule à moteur, comprenant le dispositif 2 de la figure 2.

## Revendications

1. Procédé de régulation de vitesse d'un véhicule à partir d'un véhicule cible, ledit procédé étant mis en œuvre par au moins un processeur, ledit procédé comprenant les étapes suivantes :
- détection (31) d'un changement de voie de circulation du véhicule d'une première voie de circulation, sur laquelle circule le véhicule, vers une deuxième voie de circulation, sur laquelle va circuler le véhicule lorsque le changement de voie de circulation sera terminé, la deuxième voie de circulation étant délimitée par une ligne de rive et une ligne de séparation ;
- détection (32) d'un premier véhicule cible circulant dans la première voie de circulation et d'un deuxième véhicule cible circulant dans la deuxième voie de circulation ;
**caractérisé en ce qu'**il comprend les étapes suivantes :
- obtention (33) d'une première distance latérale entre le premier véhicule cible et la ligne de rive et d'une deuxième distance latérale entre le deuxième véhicule cible et la ligne de rive ;
- la vitesse du véhicule étant alors régulée (34) par rapport au premier véhicule cible si la première distance latérale est inférieure à la deuxième distance latérale, et au deuxième véhicule cible si la première distance latérale est supérieure à la deuxième distance latérale.

2. Procédé selon la revendication 1, dans lequel la première voie de circulation étant délimitée par une ligne de rive et la ligne de séparation, le changement de voie de circulation est détecté par comparaison de distances latérales du véhicule par rapport aux lignes de rive de la première et deuxième voies de circulation.

3. Procédé selon l'une des revendications précédentes, dans lequel une ligne de rive est représentée par un polynôme.

4. Procédé selon la revendication 3, dans lequel la ligne de rive de la première voie de circulation est représentée par un polynôme de degré 3 dont une valeur constante est égale à une troisième distance latérale entre le véhicule et la ligne de rive de la première voie de circulation, et la ligne de rive de la deuxième voie de circulation est représentée par un polynôme de degré 3 dont une valeur constante est égale à une quatrième distance latérale entre le véhicule et la ligne de rive de la deuxième voie de circulation.

5. Procédé selon la revendication 4, dans lequel un indice d'existence de ligne étant associé à chaque ligne marquée sur le sol des voies de circulation, la première, deuxième, troisième et quatrième distances sont obtenues si les indices d'existence des lignes de rive de la première et deuxième voies de circulation sont supérieurs à un seuil.

6. Programme d'ordinateur comportant des instructions pour la mise en œuvre du procédé selon l'une quelconque des revendications précédentes, lorsque ces instructions sont exécutées par un processeur.

7. Support d'enregistrement lisible par un ordinateur sur lequel est enregistré un programme d'ordinateur comprenant des instructions pour l'exécution des étapes du procédé selon l'une des revendications 1 à 5.

8. Dispositif (2) d'aide à la conduite d'un véhicule circulant sur une voie de circulation, ledit dispositif (2) comprenant une mémoire (21) associée à au moins un processeur (20) configuré pour la mise en œuvre des étapes du procédé selon l'une quelconque des revendications 1 à 5.

9. Véhicule (10) comprenant le dispositif (2) selon la revendication 8.

## Patentansprüche

1. Verfahren zum Regulieren der Geschwindigkeit eines Fahrzeugs von einem Zielfahrzeug aus, wobei das Verfahren von mindestens einem Prozessor ausgeführt wird, wobei das Verfahren die folgenden Schritte umfasst:
- Erkennung (31) eines Wechsels der Fahrspur des Fahrzeugs von einer ersten Fahrspur, auf der das Fahrzeug fährt, auf eine zweite Fahrspur, auf der das Fahrzeug fahren wird, wenn der Spurwechsel abgeschlossen ist, wobei die zweite Fahrspur durch eine Küstenlinie und eine Trennlinie begrenzt wird;
- Erkennung (32) eines ersten Zielfahrzeugs, das auf der ersten Fahrspur fährt, und eines zweiten Zielfahrzeugs, das auf der zweiten Fahrspur fährt;
**dadurch gekennzeichnet, dass** es die folgenden Schritte umfasst:
- Erreichen (33) eines ersten seitlichen Abstands zwischen dem ersten Zielfahrzeug und der Küstenlinie und eines zweiten seitlichen Abstands zwischen dem zweiten Zielfahrzeug und der Küstenlinie;
- die Geschwindigkeit des Fahrzeugs, das dann geregelt werden soll (34), in Bezug auf das erste Zielfahrzeug, wenn der erste seitliche Abstand kleiner ist als der zweite seitliche Abstand, und die des zweiten Zielfahrzeugs, wenn der erste seitliche Abstand größer als der zweite seitliche Abstand ist.

2. Verfahren nach Anspruch 1, wobei die erste Fahrspur durch eine Bahnlinie und die Trennlinie begrenzt wird, wobei der Wechsel der Fahrspur durch Vergleich der seitlichen Abstände des Fahrzeugs mit den Bahnlinien der ersten und zweiten Fahrspur erfasst wird.

3. Verfahren nach einem der vorhergehenden Ansprüche, wobei eine Nietlinie durch ein Polynom dargestellt wird.

4. Verfahren nach Anspruch 3, wobei die Randlinie der ersten Fahrspur durch ein Polynom 3. Grades dargestellt wird, dessen konstanter Wert gleich einem dritten seitlichen Abstand zwischen dem Fahrzeug und der Randlinie der ersten Fahrspur ist, und wobei die Randlinie der zweiten Fahrspur durch ein Polynom 3. Grades dargestellt wird, dessen konstanter Wert gleich a ist. vierter seitlicher Abstand zwischen dem Fahrzeug und der Randlinie der zweiten Fahrspur.

5. Verfahren nach Anspruch 4, wobei ein Hinweis auf das Vorhandensein einer Linie, die mit jeder auf dem Boden der Fahrspuren markierten Linie verbunden ist, die erste, zweite, dritte und vierte Entfernung erhalten wird, wenn die Indizes für das Vorhandensein der Randlinien der ersten und zweiten Fahrspur größer als ein Schwellenwert sind.

6. Computerprogramm mit Anweisungen zum Ausführen des Verfahrens nach einem der vorhergehenden Ansprüche, wenn solche Anweisungen von einem Prozessor ausgeführt werden.

7. Computerlesbares Aufzeichnungsmedium, auf dem ein Computerprogramm gespeichert ist, einschließlich Anweisungen zum Ausführen der Verfahrensschritte nach einem der Ansprüche 1 bis 5.

8. Vorrichtung (2) zur Unterstützung des Fahrers eines Fahrzeugs, das auf einer Fahrspur fährt, wobei die Vorrichtung (2) einen Speicher (21) umfasst, der mindestens einem Prozessor (20) zugeordnet ist, der zum Ausführen der Verfahrensschritte gemäß einem der Ansprüche 1 bis 5 konfiguriert ist.

9. Fahrzeug (10) mit der Vorrichtung (2) nach Anspruch 8.

## Claims

1. A method for regulating the speed of a vehicle from a target vehicle, said method being implemented by at least one processor, said method comprising the following steps:
- detection (31) of a change in the vehicle's lane of traffic from a first lane of traffic, on which the vehicle travels, to a second lane of traffic, on which the vehicle will travel when the lane change is completed, the second lane of traffic being delimited by a shoreline and a separation line;
- detection (32) of a first target vehicle travelling in the first lane of traffic and of a second target vehicle travelling in the second lane;
**characterized in that** it comprises the following steps:
- obtaining (33) a first lateral distance between the first target vehicle and the shoreline and a second lateral distance between the second target vehicle and the shoreline;
- the speed of the vehicle being then regulated (34) in relation to the first target vehicle if the first lateral distance is less than the second lateral distance, and the second target vehicle if the first lateral distance is greater than the second lateral distance.

2. A method according to claim 1, wherein the first lane of traffic being bounded by a riveline and the dividing line, the change of traffic lane is detected by comparing the lateral distances of the vehicle to the rivelines of the first and second lanes.

3. A method according to one of the preceding claims, wherein a riveting line is represented by a polynomial.

4. A method according to claim 3, wherein the edge line of the first lane of traffic is represented by a polynomial of degree 3 having a constant value equal to a third lateral distance between the vehicle and the edge line of the first lane of traffic, and the edge line of the second lane of traffic is represented by a polynomial of degree 3 of which a constant value is equal to a fourth lateral distance between the vehicle and the edge line of the second lane of traffic.

5. A method according to claim 4, wherein an indication of the existence of a line being associated with each line marked on the floor of the traffic lanes, the first, second, third and fourth distances are obtained if the indices of the existence of the edge lines of the first and second traffic lanes are greater than a threshold.

6. A computer program with instructions for carrying out the method according to any one of the preceding claims, when such instructions are executed by a processor.

7. A computer-readable recording medium on which a computer program is stored including instructions for performing the process steps according to any of claims 1 to 5.

8. A device (2) for assisting the driver of a vehicle traveling on a traffic lane, said device (2) comprising a memory (21) associated with at least one processor (20) configured for carrying out the process steps according to any one of claims 1 to 5.

9. A vehicle (10) comprising the device (2) according to claim 8.
